# EUROPEAN PATENT APPLICATION

(11) **EP 1 205 915 A2**
(43) Date of publication of application: **15.05.2002**
(21) Application number: 01126413.2
(22) Date of filing: 07.11.2001
(51) Int. Cl.: G11B 5/86, G11B 17/00, G11B 5/596

(54) **Method and device for magnetic transfer and magnetic recording medium**

(30) Priority: 07.11.2000 JP 2000339023; 14.12.2000 JP 2000380304
(71) Applicant: Fuji Photo Film Co., Ltd., Kanagawa-ken (JP)
(72) Inventor: Nishikawa, Masakazu, Odawara-shi, Kanagawa-ken (JP)
(74) Representative: HOFFMANN - EITLE

(57) **Abstract**

Magnetic transfer of information signals such as servo signals from a master carrier to a slave media is prevented from degradation of transfer quality caused by imperfect contact of the master carrier with the slave medium attributable to dust adhesion. Specifically, when the master carrier (3,4) that bears the information signals is brought into close contact with the slave medium (2) for performing magnetic transfer by application of a magnetic field thereto, the slave medium, with its recording surface facing vertically, is conveyed toward the master carrier, held by a contact means (8,9,10) with its information-bearing surface facing vertically. Then the master carrier and the slave medium are brought into close contact with each other and subjected to magnetic transfer with contact surfaces thereof set vertically, whereby adhesion and deposition of floating dust or the like are prevented.

## Description

### BACKGROUND OF THE INVENTION

### Field of the Invention

The present invention relates to a magnetic transfer method and a magnetic transfer device for magnetically transferring information borne on a master carrier to a slave medium, and to a magnetic recording medium onto which information is magnetically transferred.

### Description of the Related Art

Magnetic transfer is a technology of applying magnetic field for magnetic transfer during a state in which a master carrier that bears information for transfer composed of concavo-convex micro-patterns of magnetic materials and a magnetic recording medium serving as a slave medium are in close contact, and of transferring and recording magnetic patterns corresponding to the information (e.g. servo signals) borne on the master carrier to a recording surface of the slave carrier. Methods of such magnetic transfer are disclosed, for example, in Japanese Unexamined Patent Publication Nos. 63(1988) - 183623, 10(1998) - 40544, 10(1998) - 269566, and the like.

In these methods of magnetic transfer, the master carrier is held in a manner that an information-bearing surface thereof is kept horizontal when performing magnetic transfer, and the slave medium is conveyed in a manner that the recording surface thereof is also kept horizontal, whereby magnetic transfer is performed by closely contacting both members horizontally and applying magnetic field for magnetic transfer thereto.

Incidentally, in the course of magnetic transfer as described above, repeated use of the master carrier causes contamination on its surface by the adhesion of dust. The dust adhered to the master carrier includes ambient dust, dust that was adhered to slave media, shavings of the master carrier and the slave media generating from contact of the master carrier and the slave media, and the like.

If magnetic transfer is performed with the dust interposed between contact surfaces of the master carrier and the slave medium, close contact of the master carrier and the slave medium is not secured in regions ranging from the centers of dust-adhered portions to their perimeters, whereby pattern transfer at a predetermined signal level is inhibited. Thus, the quality of magnetic transfer is degraded. If the recorded signals had been servo signals, there was a problem of degradation of reliability owing to an insufficiently obtained tracking function.

Repetition of close contact of the master carrier and the slave media encourages adherence of the above-mentioned dust adhered to the surface of the master carrier, and incurs equal or larger defects of pattern transfer in all subsequent slave media transferred thereafter, thus it becomes a source of numerous defective products. Furthermore, the adhered dust deforms the surface of the master carrier, thus causing a problem of impairing a normal function thereof.

In conventional magnetic transfer as described above, in particular, the master carrier is held in the state that its information-bearing surface is kept horizontal, and the slave medium is conveyed in the state that its recording surface is kept horizontal. Accordingly, any one of the information-bearing surface and the recording surface is placed faceup, and the dust floating thereabout such as particulates generated from movable parts of a device during a conveyance process or a contact process is allowed to fall down by gravity on a horizontal plane of either the master carrier or the slave medium and adhere thereto, whereby the dust is interposed between the contact surfaces.

The present invention has been developed in consideration of the above-described problem. An object of the present invention is to provide a method of magnetic transfer and a magnetic transfer device that are capable of magnetically transferring with high reliability while preventing deterioration of transfer quality associated with adhesion of dust between contact surfaces of a master carrier and a slave medium, and to provide a magnetic recording medium.

Moreover, in the above-mentioned magnetic transfer, a plurality of the slave media are normally subjected to serial magnetic transfer by use of one master carrier according to the following steps of: setting up the master carrier on a magnetic transfer device in advance; conveying each of the slave media to an appropriate position to contact the master carrier; bringing the membersinto close contact with each other; and applying transfer magnetic field. In the course thereof, carrying the slave media into such a contact position and carrying the slave media out after transfer are operations that require caution in terms of preventing the recording surfaces from marring, scratching, and the like.

In addition, in the case when the signals subject to transfer are servo signals, it is important to suppress magnitude of relative dislocation between the master carrier and the slave medium upon close contact thereof, and to reduce the eccentricity between them. Where a large eccentricity is present, a recording/reproducing system cannot follow the tracks on the slave medium; accordingly, the slave medium does not function as a recording medium. In order to align the master carrier with the slave medium, precise fiducial points are required on each of them. However, setting of the fiducial points is difficult in a method of directly conveying the slave media. Therefore, it has been difficult to achieve the correct relative positions efficiently.

Furthermore, since the slave medium and the master carrier are made to be in close contact in the course of magnetic transfer, air between the contact surfaces is evacuated and the slave medium may remain attached on the master carrier after the magnetic transfer from time to time. Such attachment is quite strong; therefore, direct conveyance of the slave media has a risk of marring thereof in peeling it off the master carrier and it is time-consuming at the same time. Accordingly, the direct conveyance constitutes an obstacle to improvements in production efficiency owing to an inability to raise the conveyance rate.

The present invention has also been developed in consideration of the above-described problem. Another object of the present invention is to provide a method of magnetic transfer and a magnetic transfer device that are capable of magnetically transferring with high production efficiency by means of improvements in conveyance and alignment of the slave medium when closely contacting the master carrier with the slave medium for magnetic transfer.

### SUMMARY OF THE INVENTION

A method of magnetic transfer according to the present invention is a method of magnetic transfer that performs magnetic transfer by making a master carrier bearing information signals and a slave medium closely contact each other and by applying transfer magnetic field thereto, in which the slave medium is conveyed in a manner such that its surface faces vertically toward the master carrier being held in a manner such that an information-bearing surface thereof is held vertically, then making the information-bearing surface of the master carrier and the recording surface of the slave medium closely contact each other.

Moreover, a magnetic transfer device according to the present invention is a magnetic transfer device that performs magnetic transfer by making a master carrier bearing the information signals and a slave medium closely contact each other and by applying transfer magnetic field thereto, which comprises: a contacting means that holds the master carrier in a manner such that its information-bearing surface faces vertically and making the information-bearing surface contact the slave medium; a conveying means for conveying the slave medium in a manner such that its recording surface faces vertically toward the contacting means; and a magnetic field generating means for applying magnetic field to the slave medium and the master carrier collectively held by the contacting means.

The slave medium is subjected to a cleaning process to remove micro projections or adhered dust on the surface prior to contacting with the master carrier when necessary. Such a cleaning process is preferably performed in a state that the recording surface faces vertically. Moreover, the slave medium is subjected to initial magnetization when necessary. In this event, this process is also preferably performed in a state that the recording surface faces vertically. Meanwhile, there may be a case that the master carrier is subjected to a cleaning process to remove adhered dust prior to contacting with the slave medium when necessary. This is also preferably processed in a manner such that the information-bearing surface of the master carrier faces vertically as much as possible.

The contacting means is designed to perform magnetic transfer according to the steps of: positioning and holding one or two pieces of master carrier(s); pressing the master carrier(s) onto either one or both surfaces of a positioned slave medium so that they contact closely to one another; and rotating either the closely contacted object or the magnetic field generating means relatively.

The slave medium is either a flexible disk or a hard disk. The slave media are held by known conveyance means (such as a conveyor or a robot hand) to be conveyed in series toward the master carrier(s) held by the contacting means.

Either an electromagnetic device or a permanent magnetic device is adopted as the magnetic field generating means to apply transfer magnetic field from one or both sides of closely contacted portions of the master carrier(s) and the slave medium.

In the magnetic recording medium of the present invention, the information signals being magnetically transferred by the foregoing method of magnetic transfer or with the magnetic transfer device are designated as servo signals.

Moreover, in a method of magnetic transfer of the present invention for magnetically transferring by allowing a master carrier bearing information for transfer and a slave medium to contact closely with each other and by applying transfer magnetic field thereto, it is preferable that the slave medium is conveyed to a position for close contact with the master carrier in a state in which the slave medium is held by a slave holder.

In this case, it is preferable that the slave medium is positioned and held at the slave holder, and that alignment of the master carrier with the slave medium at the time of magnetic transfer is performed via the slave holder. Besides, as for the alignment of the master carrier with the slave medium, various methods are adaptable thereto such as a method of direct alignment between the master carrier and the slave medium and a method of direct alignment between a holder at which the master carrier is positioned and held, and the slave medium.

In addition, a magnetic transfer device of the present invention is preferably a magnetic transfer device for performing magnetic transfer by allowing a master carrier bearing information for transfer and a slave medium to contact closely with each other and by applying transfer magnetic field thereto, which comprises: a close contact base for positioning and holding the master carrier; a slave holder for positioning and holding the slave medium and conveying the slave medium to a position for close contact; pressurizing means for allowing the slave medium held by the slave holder and the master carrier to closely contact each other; a positioning mechanism for aligning the close contact base with the slave holder; and magnetic field applying means for applying transfer magnetic field to the slave medium and the master carrier that are in close contact with each other.

The aforementioned positioning mechanism is preferably designed in a manner that: a plurality of positioning pins or positioning holes are provided on the close contact base; a plurality of positioning holes or positioning pins are provided on the slave holder; and alignment is performed by engaging the positioning pins with the positioning holes. In this case, it is preferable that diameters of the positioning holes are designed to be greater than those of the positioning pins so that the positioning pins and the positioning holes are partially engaged for alignment while facilitating disengagement thereof.

It is preferable that the pressurizing means only pressurizes the slave medium, and does not act on the slave holder.

Either an electromagnetic device or a permanent magnetic device is adopted as the magnetic field applying means to apply transfer magnetic field from one or both sides of closely contacted portions of the master carrier and the slave medium, and the magnetic field applying means performs magnetic transfer by relatively rotating either the closely contacted master carrier and slave medium or the transfer magnetic field.

It should be noted that the foregoing magnetic transfer is preferably designed to perform magnetic transfer according to the process of: initially magnetizing to the slave medium at the outset in a form of direct-current magnetization along the tracking direction thereof; closely contacting the slave medium with the master carrier being provided with a magnetic layer formed into concavo-convex micro-patterns corresponding to information for transfer; and applying magnetic field in a direction approximately reverse to the direction of the initial magnetization of a surface of the slave medium. As for the aforementioned information, servo signals are preferred.

According to the present invention as described above, the quantity of dust adhering to a master carrier and a slave medium is reduced by conveying the slave medium in a manner that a recording surface thereof faces vertically toward a master carrier held in a manner that an information-bearing surface faces vertically in order to allow the both members to contact closely with each other for performing magnetic transfer. In this way, degradation of transferred signals being incurred by imperfect contact of the master carrier and the slave medium attributable to interposition of contaminants can be prevented. Accordingly, the present invention effectuates execution of magnetic transfer of stable quality, improvements in reliability, reduction of cleaning processes of the master carrier, and extension of the durability of the master carrier by preventing damage thereof.

Moreover, in the present invention as described above, in the case when the slave medium is conveyed to the contact position with the master carrier in a state that the slave medium is held on the slave holder, conveyance of the slave medium into the contact position and conveyance of the slave medium out of said position after transfer can be readily performed , whereby the recording surface thereof is prevented from marring. Furthermore, when peeling the slave medium off after magnetic transfer, application of force to the slave holder increases peeling power, whereby the slave medium closely attached on the master carrier can be promptly peeled off. Speed of conveyance can be thereby increased thus improving production efficiency.

Moreover, standard setting upon alignment between the master carrier and the slave medium during magnetic transfer is facilitated, whereby accuracy of relative positions can be obtained efficiently and correctly. Accordingly, magnetic transfer can be performed with high positioning accuracy and stable quality, whereby reliability is enhanced. Particularly in the case that the slave medium is positioned and held in the slave holder, and position alignment of said slave medium and the master carrier is performed via said slave holder at the time of magnetic transfer, accurate positioning can be performed easily, thus improving production efficiency.

Furthermore, in the device according to the present invention, magnetic transfer can be achieved with high accuracy and high production efficiency as described above in the case when the close contact base for positioning and holding the master carrier, the slave holder for positioning and holding the slave medium and conveying the slave holder to the position for close contact, the pressurizing means for allowing the slave medium and the master carrier to closely contact each other, the positioning mechanism for aligning the close contact base with the slave holder, and the magnetic field applying means for applying transfer magnetic field, are provided.

When the positioning mechanism is designed to perform alignment by means of engaging a plurality of positioning pins or positioning holes provided on the close contact base and a plurality of positioning holes or positioning pins provided on the slave holder, such a mechanism can readily and surely align the slave medium with the master carrier. Particularly when the mechanism is designed to achieve partial engagement by the diameters of the positioning holes being provided to be greater than the diameters of the positioning pins, such design facilitates disengagement thus effectuating extension of durability.

### BRIEF DESCRIPTION OF THE DRAWINGS

Fig. 1 is a perspective view of a main part of a magnetic transfer device according to one embodiment of the present invention, showing a state of transfer thereof.
Fig. 2 is an exploded perspective view of the close contacting means.
Fig. 3 is an exploded perspective view of the close contacting means according to another embodiment.
Fig. 4 is a perspective view of a main part of a magnetic transfer device according to another embodiment of the present invention, showing a state of transfer thereof.
Fig. 5 is a cross-sectional view of the main part showing a state prior to close contact.
Fig. 6 is a cross-sectional view of the main part showing a state of close contact.
Fig. 7 is a plan view showing a positioning mechanism.
Figs. 8A to 8C are views showing a fundamental process of a method of magnetic transfer.

### DESCRIPTION OF THE PREFERRED EMBODIMENTS

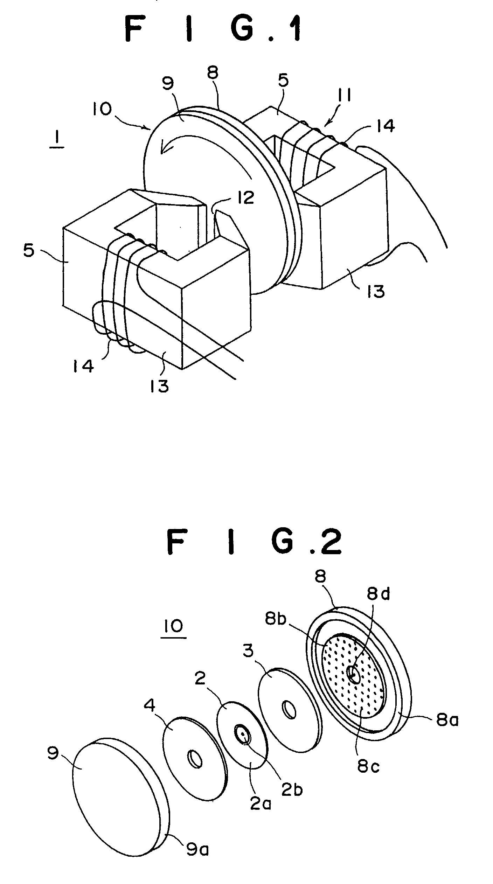

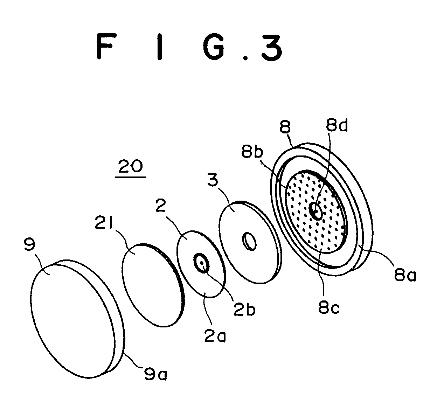

Now, embodiments of the present invention will be hereinbelow described in detail. Fig. 1 is a perspective view of a main part of a magnetic transfer device that carries out a method of magnetic transfer according to one embodiment of the present invention, showing a state of transfer thereof. Fig. 2 is an exploded perspective view of the close contacting means, and Fig. 3 is an exploded perspective view of the close contacting means according to another embodiment. It should be noted herein that all the above-mentioned drawings are schematic; therefore, dimensions therein such as thickness thereof are illustrated by use of different ratios from those in actuality.

A magnetic transfer device 1 as shown in Fig. 1 and Fig. 2 is designed to perform simultaneous double-sided transfer. Basically, magnetic transfer is performed therein in a manner that two pieces of master carriers 3 and 4 each bearing information signals corresponding to servo signals are contacted with double-sided recording surfaces of a slave medium 2 (a magnetic recording medium) and then transfer magnetic field are applied thereto. The device 1 comprises; close contacting means 10 for holding the two master carriers 3 and 4 in a manner that information-bearing surfaces thereof face vertically and for allowing them to contact with both recording surfaces of the slave medium 2; conveying means (not shown) for conveying the slave medium 2 onto the contacting means 10 while allowing the recording surfaces thereof to face vertically; and magnetic field generating means 11 for applying transfer magnetic field to the slave medium 2 held at the close contacting means 10 and to the master carriers 3 and 4.

A method of magnetic transfer in the above case comprises the steps of: conveying the slave medium 2 in a manner that the recording surfaces thereof face vertically, with respect to the master carriers 3 and 4 held in a manner that the information-bearing surfaces thereof face vertically; bringing the information-bearing surfaces of the master carriers 3 and 4 into close contact with the recording surfaces of the slave medium 2; applying transfer magnetic field from both sides of the closely contacted master carrier and slave medium by the magnetic field generating means 11 while rotating the closely contacted master carrier and slave medium; and performing magnetic transfer of information borne on the master carriers 3 and 4 simultaneously onto both surfaces of the slave medium 2.

The close contacting means 10 comprises: a first pressure member 8 that adsorbs and holds a first master carrier 3 used for transfer information such as servo signals onto one of the recording surfaces of the slave medium 2; and a second pressure member 9 that adsorbs and holds a second master carrier 4 used for transfer information such as servo signals onto the other recording surface of the slave medium 2. Here, the first pressure member 8 and the second pressure member 9 are disposed so that they can move attachably and detachably by an moving mechanism (not shown), whereby the first master carrier 3 and the second master carrier 4 are brought into close contact with both surfaces of the slave medium 2 in a state that central positions of the respective surfaces for contact, which are allowed to face vertically, are concentrically aligned.

The illustrated slave medium 2 is a flexible disk composed of a discoid recording medium 2a with a hub 2b fixed to the center thereof. The recording medium 2a comprises recording surfaces on both faces of a discoid base composed of a flexible sheet of polyester or the like, with magnetic layers being formed on both sides thereof. The slave medium 2 is held by a known conveying means (i.e. a conveyor or a robot hand) in a manner that the recording surfaces thereof face vertically, and then it is conveyed sequentially to a space between the first master carrier 3 and the second master carrier 4 while the close contacting means 10 is in a state of separation. Note that a hard disk may also be adopted as the slave medium 2. In the case that a hard disk is utilized, it is also conveyed to the close contacting means 10 by the conveying means similarly in the state that the recording surfaces thereof face vertically.

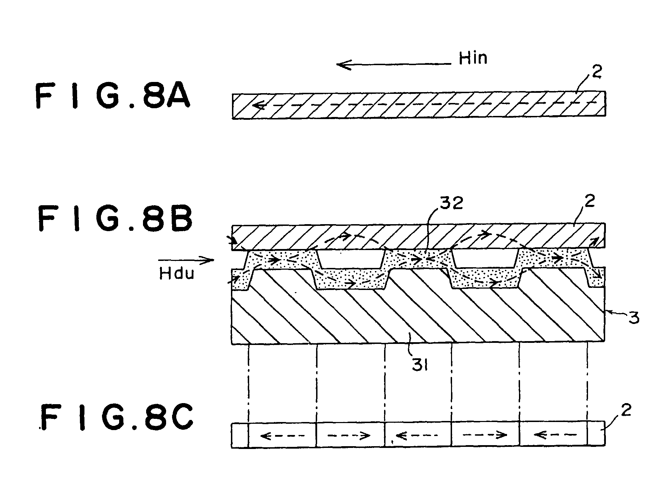

The above-described first master carrier 3 and second master carrier 4 are formed into discoid shapes, and each of them possesses an information-bearing surface for transfer composed of concavo-convex micro-patterns (to be described later with reference to Figs. 8A to 8C) on one surface thereof, which is to be closely contacted with the recording surface of the slave medium 2. The opposite surfaces thereof are held by the first pressure member 8 and the second pressure member 9. On the first master carrier 3 and second master carrier 4 are formed micro holes penetrating from top surfaces to bottom surfaces thereof in positions corresponding to portions where the concavo-convex micro-patterns are not formed on and to portions where inlet holes 8c as described later do not communicate therewith, in order to enhance adherence thereof to the slave medium 2 when necessary. These holes are provided for the purpose of suction and discharge of air in the space between each of the master carriers and the slave medium 2.

The first pressure member 8 (and the second pressure member 9 as well) is provided with an adsorption plane 8b corresponding to the size of the master carrier 3 having inlet apertures 8c provided substantially uniformly therethrough, in order to adsorb and hold the master carrier 3. One or both of the first pressure member 8 and the second pressure member 9 are provided so as to be movable along the axial direction thereof, and the opening and closing motion thereof is operated by an opening and closing mechanism not shown in the figure (such as a pressing mechanism or a fastening mechanism) so that the pressure members are pressed to contact with each other by a predetermined pressure. Flanges 8a and 9a are provided in the periphery thereof, whereby the flanges 8a and 9a of the pressure members 8 and 9 on both sides abut each other to hermetically seal the interior when the pressure members are closed. In the center of the first pressure member 8 is formed a pin 8d that engages with a center hole of the hub 2b of the slave medium 2 and performs positioning. Moreover, the first pressure member 8 and the second pressure member 9 are linked to a rotating mechanism (not shown), whereby they are rotatively driven together during application of magnetic field.

It should be noted that the structure of the contacting means 10 for holding the master carriers 3 and 4 is not limited to adsorptive holding as described above, but other holding structures such as fitting or pin-engagement may be adoptable.

The magnetic field generating means 11 comprises electromagnetic devices 5 and 5 disposed on both sides of the contacting means 10. Each of the electromagnetic devices 5 and 5 is constituted by wrapping a coil 14 around a core 13 that is provided with a gap 12 extending to a radial direction of the contacting means 10. The line of magnetic force generated at the gap 12 has a direction parallel to the tracking direction (the direction of the tangent line of circumferential tracks) of the slave medium 2 being held at the contacting means. Note that the magnetic field generating means 11 may be composed of permanent magnetic devices instead of electromagnetic devices.

Moreover, the magnetic field generating means 11 is designed in a manner that the electromagnetic devices on both sides can move attachably and detachably to allow opening and closing motion of the contacting means 10, or it is designed in a manner that either the electromagnetic devices 5 and 5 or the contacting means 10 are made movable in order that the contacting means 10 is interposed between the electromagnetic devices 5 and 5.

The contacting means 10 is designed to perform magnetic transfer on a plurality of slave media 2 by use of a single set of the first master carrier 3 and the second master carrier 4. The first master carrier 3 and the second master carrier 4 are held with the centers thereof aligned by the contacting means 10, and the slave medium 2, having been conveyed in a manner that the recording surface thereof faces vertically, is set concentrically therewith in an open state where the first pressure member 8 and the second pressure member 9 are detached. Then the first pressure member 8 and the second pressure member 9 are subjected to a closing motion so that they approach each other, whereby the master carriers 3 and 4 closely contact the slave medium 2. Thereafter, the electromagnetic devices 5 and 5 approach the two faces of the contacting means 10 by movement of the electromagnetic devices 5 and 5 both on the left and right sides or of the contacting means 10; and the information for transfer existing on the first master carrier 3 and the second master carrier 4 is transferred and recorded on the recording surfaces of the slave medium by means of applying transfer magnetic field by the electromagnetic devices 5 and 5 while rotating the contacting means 10. Alternatively, the magnetic field generating means 11 may be rotatable.

When magnetic transfer is completed, the close contact state is released by the opening motion of the contacting means 10. Then, the post-transfer slave medium 2 having information transferred thereon is ejected from the contacting means 10 and conveyed out. Such conveyance of the post-transfer slave medium 2 may be carried out with said medium in a horizontal state.

Moreover, when necessary, the slave medium 2 is subjected to a cleaning process by means of removing micro projections or dust adhered to a surface thereof prior to closely contacting the master carrier 3. Furthermore, as described later, when the slave medium 2 is initially magnetized in advance, it is also preferred that the cleaning process is executed in a manner that the recording surface is allowed to face vertically. The initial magnetization is preferably performed inside the contacting means 10 by the magnetic field generating means 11 or in a precedent step thereto, or it may be carried out on the slave medium before it is conveyed to the magnetic transfer device 1. Meanwhile, there may be a case that the master carrier 3 is subjected to a cleaning process for removing adhered dust prior the master carrier 3 closely contacting the slave medium 2 as necessary. This step is also performed in a manner that the information-bearing surface faces vertically.

According to this embodiment, when bringing the master carriers 3 and 4 into close contact with both surfaces of the slave medium 2 in order to perform magnetic transfer, by holding each of the master carriers 3 and 4 in a manner that the information-bearing surface thereof faces vertically, and by conveying the slave medium 2 for contacting in a manner that the recording surfaces thereof face vertically, it effectuates prevention of dust generated from movable parts of the device or dust floating thereabout from falling on the information-bearing surfaces and the recording surfaces to deposit and adhere thereon. In addition, degradation of transfer quality attributable to imperfect contact of the master carriers 3 and 4 with the slave medium 2 incurred by interposition of the dust between the contact surfaces thereof can be also prevented. Accordingly, good magnetic transfer can be continued efficiently.

Fig. 3 is an exploded perspective view showing contacting means 20 of another embodiment. It is an example for performing single-sided transfer. The contacting means 20 comprises: a first pressure member 8 that holds a single master carrier 3 used to transfer information such as servo signals onto one of the recording surfaces of a slave medium 2; and a second pressure member 9 that holds an elastic member 21 (a cushion) for contacting the other recording surface of the slave medium 2. Here, master carrier 3 and slave medium 2 are pressed to contact in a state that central positions thereof are concentrically aligned, whereby the master carrier 3 is allowed to contact with one surface of the slave medium 2 while the elastic member 21 is allowed to contact with the other surface of the slave medium 2. In other words, the contacting means 20 is constituted in a similar manner to the previous embodiment except that the elastic member 21 is substituted for the second master carrier 4.

The elastic member 21 is formed into a discoid shape with a material having elasticity, and it is held at the second pressure member 9. The material for the elastic member 21 possesses characteristics of imitative transformation in accordance with surface shapes of the slave medium 2 upon pressurization for close contact, and of restitution back to the surface feature before the pressurization when the slave medium is peeled off the master carrier 3. Specifically, the material usable for the elastic member 21 includes regular types of rubber such as silicon rubber, polyurethane rubber, fluoric rubber, butadiene rubber, Teflon rubber and Viton rubber, and foamed resin such as sponge rubber. The surface of the elastic member 21 contacting with the slave medium 2 is formed into a plane shape parallel to the master carrier 3 or a convex shape toward the slave medium 2.

The contacting means 20 of this embodiment is designed to perform magnetic transfer on a plurality of slave media 20 with the master carrier 3; therefore, the master carrier 3 is first held by said contacting means in a manner that the information-bearing surface thereof faces vertically while the central position thereof is concentrically aligned. Thereafter, the slave medium 2, having been conveyed by the conveying means in a manner that the recording surface thereof faces vertically, is set concentrically with the master carrier 3 in an open state where the first pressure member 8 and the second pressure member 9 are detached. Then, the first pressure member 8 and the second pressure member 9 are subjected to a closing motion so that they approach to each other, whereby the master carrier 3 closely contacts one surface of the slave medium 2 by pressure of the elastic member 21. Thereafter, similarly to the previous embodiment, electromagnetic devices 5 on the left and the right approach the two faces of the contacting means 20, and the information for transfer existing on the master carrier 3 is magnetically transferred and recorded on one of the recording surfaces of the slave medium 2 by means of applying transfer magnetic field by the electromagnetic devices 5 while rotating the contacting means 20. Thereafter, magnetic transfer is carried out in another step by contacting the other master carrier 4 with the other recording surface of the slave medium 2. Here, it should be noted that such magnetic field generating means 11 may consist of an electromagnetic device 5 provided on only one side of the contacting means 20.

In single-sided transfer according to this embodiment, by conveying, contacting and transferring the slave medium 2 and the master carrier 3 in a manner similar to the previous embodiment so that the recording surfaces and the information-bearing surface face vertically, it effectuates prevention of dust from falling down on the information-bearing surface and the recording surfaces to deposit and adhere thereon. In addition, degradation of transfer quality attributable to imperfect contact can be also prevented. Accordingly, good magnetic transfer can be continued efficiently.

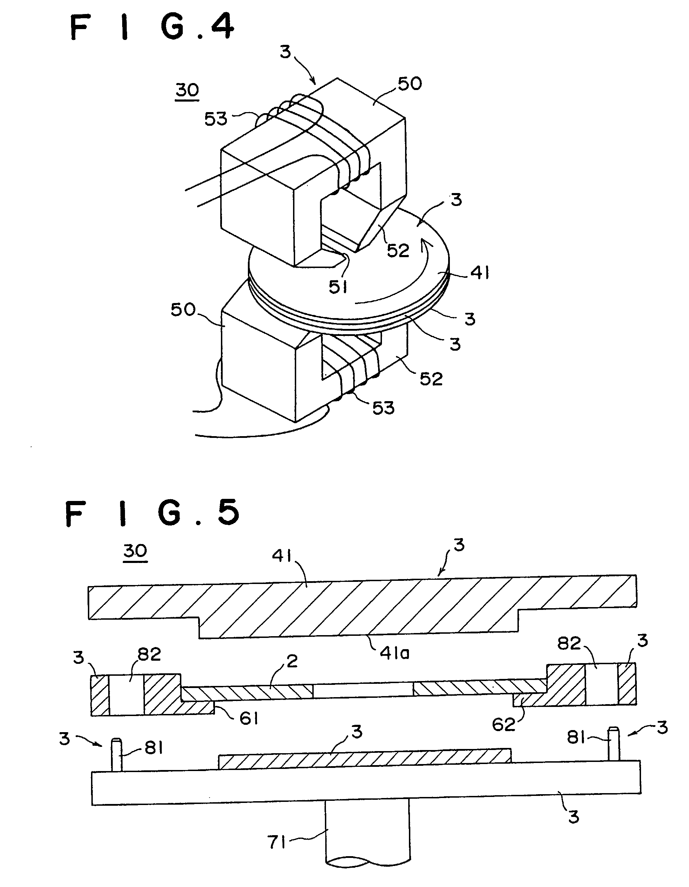

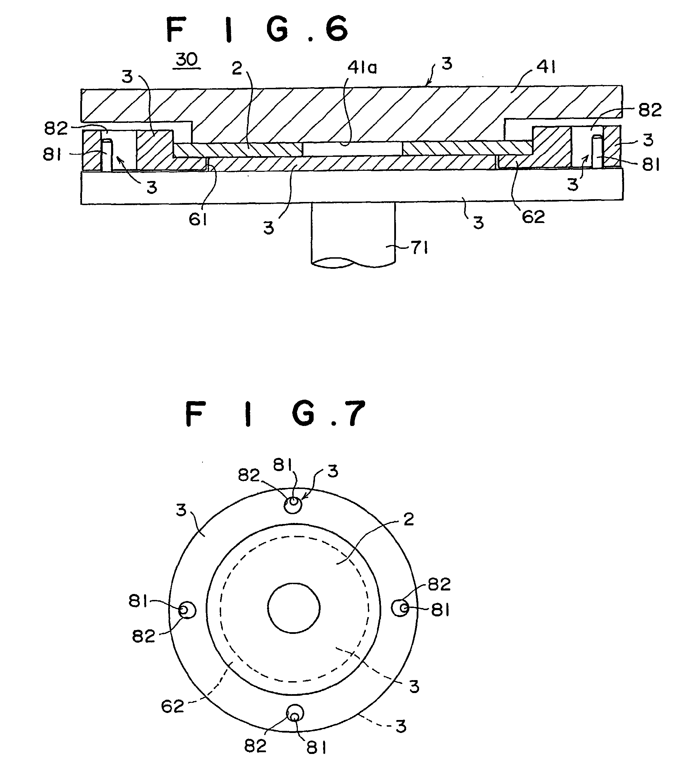

Next, a third embodiment of the present invention will be described in detail. Fig. 4 is a perspective view of a main part of a magnetic transfer device that performs a method of magnetic transfer according to one embodiment of the present invention, showing a state of transfer thereof. Fig. 5 is a cross-sectional view of the main part showing a state prior to close contact. Fig. 6 is a cross-sectional view of the main part showing a state of close contact. Fig. 7 is a plan view showing a positioning mechanism. It should be noted herein that all the above-mentioned drawings are schematic; therefore, dimensions therein such as thickness thereof are illustrated by use of different ratios from those in actuality.

A magnetic transfer device 30 as shown in Fig. 4 to Fig. 6 is designed to perform sequential single-sided transfer, and it comprises: a close contact base 37 (a turntable) for positioning and holding a master carrier 3 bearing information for transfer that corresponds to servo signals or the like; a slave holder 36 for positioning, holding and conveying a slave medium 2 (a magnetic recording medium) to a position for close contact; pressurizing means 34 (a pressing mechanism) for bringing the slave medium 2 held by the slave holder 36 and the master carrier 3 into close contact with each other; a positioning mechanism 38 for performing alignment of the close contact base 37 and the slave holder 36; and magnetic field applying means 35 for applying transfer magnetic field to the slave medium 2 and the master carrier 3 while they are in close contact with each other.

The method of magnetic transfer herein is carried out in a manner that: the slave medium 2, after initial direct-current magnetization as described later, is positioned and held at the slave holder 36 and conveyed to the position for close contact; alignment of the slave medium 2 and the master carrier 3 is carried out by the positioning mechanism 38 via the slave holder 36 such that a magnetic recording surface of the slave medium 2 will be brought into contact with an information-bearing surface of the master carrier 3 positioned and held at the close contact base 37; and both members are brought into close contact with each other under a predetermined pressure by the pressurizing means 34. The closely contacted slave medium 2 and master carrier 3 are then rotated and transfer magnetic field are applied thereto by the magnetic field applying means 35, whereby magnetic patterns of the servo signals or the like are transferred and recorded on the slave medium 2.

As shown in Fig. 5, the slave medium 2 is a discoid magnetic recording medium of a rigid body such as a hard disk, which is formed with magnetic recording layers on both surfaces thereof. The slave holder 36 that holds the slave medium 2 is formed as a torus. A bore 61 is opened in the center thereof such that its diameter is greater than that of the master carrier 3. At the lower end of the bore 61 is provided a supporting stage 62 corresponding to an external diameter of the slave medium 2. The supporting stage 62 supports the bottom surface of the slave medium 2 which is loaded from above, and it holds the slave medium 2 such that the central position thereof coincides with a fiducial position by positioning with an outer periphery. The thickness of the supporting stage 62 is made thinner than the height of the master carrier 3 protruding upward from the close contact base 37 (the thickness of the master carrier 3). As shown in Fig. 7, a plurality of positioning holes 82 (four holes in Fig. 7) that constitute the positioning mechanism 38 are opened in the perimeter of the slave holder 36.

Meanwhile, the master carrier 3 is formed into a discoid shape. The master carrier 3 includes an information-bearing surface for transfer formed with concavo-convex micro-patterns composed of a magnetic layer 32 (See Fig. 8B) on one surface (which is the top surface in the figure) thereof. The opposite surface (the bottom surface in the figure) thereof is positioned and held on an upper face of the close contact base 37 such that the central position of the master carrier 3 is positioned and held in the fiducial position.

The close contact base 37 is formed into a discoid shape and has an external diameter equivalent to the slave holder 36. The close contact base 37 holds the master carrier 3 in its center by suction of air or the like. In the perimeter of the close contact base 37 are provided, in a standing manner, a plurality of positioning pins 38 (four pins in the drawing) that constitute the positioning mechanism 38. A revolving shaft is fixed to the center of the bottom face of the close contact base 37, whereby the close contact base 37 is rotatively driven by a rotating means (not shown). An X-Y adjusting mechanism (not shown) is further annexed to the close contact base 37, whereby the central position of the master carrier 3 being held at the close contact base 37 is separately aligned with the fiducial position by using a measuring device or the like.

The positioning mechanism 38 comprises the plurality of positioning pins 81 provided at the close contact base 37 and the plurality of positioning holes 82 provided at the slave holder 36, and it is designed to perform alignment by engagement therebetween. Central positions thereof are aligned with one another. Moreover, the diameter of positioning hole 82 is formed to be greater than that of the positioning pin 81 so that a part of the positioning pin 81 engages partially with the positioning hole 82 for positioning, thus facilitating disengagement thereof. Alternatively, the positioning mechanism 38 may be designed in a manner that a plurality of positioning holes 82 are provided at the close contact base 37 while a plurality of positioning pins 81 are provided at the slave holder 36 instead.

On the upper face of the close contact base 37, a discoid pressing member 41 of the pressurizing means 34 is provided thereon as being vertically movable by means of a hoisting mechanism (not shown). The central portion on the lower face of the pressing member 41 is formed into a convex shape, and such a pressing plane 41a is provided so as to abut the slave medium 2. In this way, the pressing plane 41a is designed to press the slave medium 2 directly, while avoiding application of pressure on the slave holder 36. Pressure generated by a cylinder or the like is applied to the upper face of the pressing member by a mechanism not shown in the figure.

The magnetic field applying means 35 comprises electromagnetic devices 50 and 50 disposed on both the upper side and the bottom side, each of which is constituted by wrapping a coil 53 around a core 52 provided with a gap 51 extending to a radial direction of the slave medium 2 as well as the master carrier 3, whereby transfer magnetic field are applied thereto from the top and bottom sides concurrently in a direction parallel to the tracking directions thereof. Note that the magnetic field applying means 35 may be composed of permanent magnetic devices instead of electromagnetic devices. Furthermore, it may consist of one device to be disposed only on one side.

In the event of magnetic field application, transfer magnetic field are applied by the magnetic field applying means 35 while rotating the slave medium 2 and the master carrier 3 together, whereby the information for transfer existing on the master carrier 3 is transferred and recorded on the entire circumference of the slave medium 2. On the contrary, the magnetic field applying means 35 may also be designed to rotate the transfer magnetic field. In addition, the magnetic field applying means 35 is designed such that the electromagnetic devices 50 can recede in order to allow an opening and closing operation of the pressing member 41 of the pressurizing means 34 and the close contact base 37.

The operation of the above-described magnetic transfer device 30 will be described. Firstly, in a state prior to close contact as shown in Fig. 5 wherein the pressing member 41 is raised, the slave holder 36 on which the slave medium 2 is positioned and held beforehand is conveyed to a position above the close contact base 37 on which the master carrier 3 is positioned and held. Then, the slave holder 36 is loaded on the close contact base 37 such that the positioning pins 81 of the close contact base 37 are inserted into the positioning holes 82 of the slave holder 36. The master carrier 3 and the slave medium 2 are aligned via the slave holder 36, by positioning in accordance with engagement of the positioning pins 81 with the positioning holes 82, whereby central positions of the both members accurately coincide with each other.

Thereafter, the pressing member 41 is moved downward by the pressurizing means 34, whereby the slave medium 2 and the master carrier 3 are pressed by a predetermined pressure. In a state of close contact as shown in Fig. 6, the pressing plane 41a of the pressing member 41 abuts the upper face of the slave medium 2. The slave medium 2 is pressed such that the lower face (the magnetic recording surface) thereof closely contacts the upper face (the information-bearing surface) of the master carrier 3. In this event, the thickness of the supporting stage 62 of the slave holder 36 is made thin so that the pressure is not applied on the slave holder 36, but the slave medium 2 is directly pressed to the master carrier 3. Subsequently, the electromagnetic devices 50 and 50 on the both sides are allowed to approach each other, and the electromagnetic devices 50 and 50 apply transfer magnetic field while the close contact base 37 is rotated, whereby magnetic patterns corresponding to the information for transfer existing on the master carrier 3 are recorded on the recording surface of the slave medium 2.

After completion of magnetic transfer, the pressing member 41 is operated to open by the pressurizing means 34 so that the pressure is released. The transferred slave medium 2 is released from close contact (adsorption) with the master carrier 3 by an operation of the slave holder 36, and then the positioning pins 81 are pulled out of the positioning holes 82, whereby the slave medium 2 is ejected for conveyance. Thereafter, in another step, the slave medium 2 is reversed and then is reset on the slave holder 36 again. Then, the master carrier 3 is allowed to contact with the other surface of the slave medium 2 for performing magnetic transfer again. Otherwise, a master holding mechanism may be provided on the pressing plane 41a for carrying out simultaneous double-sided transfer.

The slave medium 2 is subjected to initial magnetization in advance. The initial magnetization (direct-current degaussing) is performed with respect to all tracks by: generating magnetic field at one part in the tracking direction, wherein the magnetic field comprises distribution of magnetic field strength including portions of magnetic strength equal to or larger than the coercive force of the slave medium 2, and such portions are included therein in the number of at least one location in a position of the tracking direction; and rotating the slave medium 2 or the magnetic field in the tracking direction. Here, it is preferred that the magnetic field include the portions of magnetic strength equal to or larger than the coercive force of the slave medium 2 of only one direction in the positions along the tracking direction, and magnetic strength of its reverse direction is below the coercive force of the slave medium 2 in any position along the tracking directions.

Moreover, the transfer magnetic field includes at least one position by one tracking direction that the magnetic field strength thereof remains within a range of the optimum magnetic field strength for transfer, in which the magnetic field strength exceeding the maximum value of the range of optimum magnetic field strength for transfer (which is 0.6 to 1.3 times of the coercive force Hcs of the slave medium 2) does not exist in either of the tracking directions. Furthermore, the magnetic field strength in its reverse direction remains below the range of optimum magnetic field strength for transfer in any position along the tracking directions within the whole region of the recording surface of the slave medium 2.

According to the present invention, by positioning and holding the slave medium 2 on the slave holder 36 for conveyance to the position for contact in the course of magnetic transfer, then bringing the slave medium 2 into close contact with the master carrier 3, handling and conveyance of the slave medium 2 are facilitated and alignment thereof with the master carrier 3 can be performed easily and accurately by the positioning mechanism 38 via the slave holder 36. Furthermore, peeling off of the closely attached slave medium 2 after transfer becomes readily feasible by means of an operation of the slave holder 36. Accordingly, good magnetic transfer can be continued efficiently, and production efficiency can be improved.

Figures 8A through 8C are views showing a fundamental aspect of magnetic transfer, in which the contact surfaces are illustrated horizontally. Fig. 8A is a view showing a step of initial direct-current magnetization of the slave medium 2 by applying magnetic field in one direction thereto. Fig. 8B is a view showing a step of applying magnetic field in a reverse direction while the master carrier 3 and the slave medium 2 closely contact each other. Fig. 8C is a view showing a state after the magnetic transfer.

First, as shown in Fig. 8A, the initial magnetization (the direct-current degaussing) is performed in advance on the slave medium 2 by applying an initial magnetic field Hin in one of the tracking directions. Then, as shown in Fig. 8B, the magnetic recording surface (a slave surface) of the slave medium 2 is brought into close contact with the information-bearing surface of the master carrier 3, which is obtained by coating a magnetic layer 32 (a metallic thin-film layer) on the concavo-convex micro-patterns on a substrate 31 of the master carrier 3, and magnetic transfer is performed in a manner that magnetic field Hdu are applied in the reverse direction of the initial magnetic field Hin along the tracking direction of the slave medium 2. As a result, as shown in Fig. 8C, information (the servo signals) corresponding to patterns composed of contacting protrusions and concave spaces of the magnetic layer 32 on the information-bearing surface of the master carrier 3 is magnetically transferred and recorded on the magnetic recording surface (tracks) of the slave medium 2.

In the case when the concavo-convex patterns on the substrate 31 of the master carrier 3 are negative, that is, they are formed in reverse to positive patterns as shown in Fig 8B, the same information can be magnetically transferred and recorded by inverting the directions of the initial magnetic field Hin and the transfer magnetic field Hdu.

The magnetic transfer is possible only with the substrate 31 if it is made of a ferromagnetic substance such as Ni. In this case, the magnetic layer 32 (a soft magnetic layer) need not be coated thereon. Nevertheless, provision of the magnetic layer 32 having good transfer properties effectuates good magnetic transfer. In the case when the substrate 31 is made of a nonmagnetic substance, then provision of the magnetic layer 32 is essential.

In the case when the substrate 31 made of ferromagnetic metal is coated with the magnetic layer 32, it is preferred to provide a nonmagnetic layer between the substrate 31 and the magnetic layer 32 in order to eliminate magnetic influences by the substrate 31. Furthermore, if a protective film made of diamond-like carbon (DLC) or the like coats the top surface thereof, such a protective film enhances contact durability thus enabling multiple magnetic transfers. A Si layer may be also formed beneath the DLC protective film by sputtering or the like.

Now, the master carrier will be described. A material usable for the substrate of the master carrier includes nickel, silicon, quartz plates, glass, aluminum, alloys, ceramics, synthetic resin and the like. Formation of the concavo-convex patterns is performed by a stamper method, a photofabrication method or the like.

The stamper method is carried out by forming photoresist on a flat glass plate (or a quartz plate) by spin coating or the like; by irradiating laser beams (or electron beams) modulated in accordance with servo signals while rotating the glass plate, and by exposing given patterns on portions corresponding to frames on circumferences of tracks over the whole surface of the photoresist, such as patterns corresponding to the servo signals extending linearly in a direction from the center of rotation along the radius thereof. Thereafter, the photoresist is developed whereby exposed portions thereof are removed, thus obtaining an original disc formed with concavo-convex shapes of the photoresist. Subsequently, the surface of the original disc formed with the concavo-convex patterns is subjected to plating (electroforming), whereby a Ni substrate having positive concavo-convex patterns based on the concavo-convex patterns of the mother disc is fabricated and then peeled off the mother disc. This substrate can serve directly as the master carrier; or it is subjected to coating of a nonmagnetic layer, a soft magnetic layer and a protective film on the concavo-concave patterns thereon when necessary, thus obtaining the master carrier.

Otherwise, a second original disc may be formed by plating on the original disc, and the second original disc is again used for plating, whereby a substrate having negative concavo-convex patterns may be fabricated. Furthermore, a third original disc may be formed by subjecting the second original disc to plating, or by pressing a resin solution thereto and then curing said resin, and the third original disc may be further subjected to plating, whereby a substrate having positive concavo-concave patterns may be obtained.

Meanwhile, an original disc may be formed in a manner that: the glass plate formed with the patterns of the photoresist is thereafter subjected to etching so that holes are formed thereon; and then the photoresist is removed. Similar processes as described above may follow thereafter to obtain substrates.

Ni or a Ni alloy may be used as a metallic material for the substrate. As for the plating to form the substrate, various metallic film-forming methods including electroless plating, electroforming, sputtering, ion plating and the like, are applicable. The depth of the concavo-convex patterns (the height of protrusions) on the substrate is preferably in a range from 80 nm to 800 nm, more preferably in a range from 150 nm to 600 nm. In the case that said concavo-convex patterns are servo signals, the concavo-convex patterns are formed lengthwise in the radial direction. For example, it is preferable that the length in the radial direction is in a range from 0.3 to 20 µm, and the length in the circumferential direction is in a range from 0.2 to 5 µm. It is preferable to select patterns having longer dimensions in the radial direction from the range as described above, in order to obtain patterns for bearing the information of the servo signals.

Formation of the magnetic layer (the soft magnetic layer) of the master carrier is performed by film forming with a magnetic material using vacuum film-forming means such as a vacuum deposition method, a sputtering method and an ion plating method, or by using a plating method. A magnetic material usable for the magnetic layer includes Co, Co alloys (such as CoNi, CoNiZr and CoNbTaZr), Fe, Fe alloys (such as FeCo, FeCoNi, FeNiMo, FeAlSi, FeAl and FeTaN), Ni and Ni alloys (such as NiFe). The thickness of the magnetic layer is preferably in a range from 50 nm to 500 nm, more preferably in a range from 150 nm to 400 nm. Moreover, as a nonmagnetic material usable for an under layer to be provided beneath the magnetic layer includes Cr, CrTi, CoCr, CrTa, CrMo, NiAl, Ru, C, Ti, Al, Mo, W, Ta and Nb. The nonmagnetic layer can suppress degradation of signal quality in the case when the substrate is made of a ferromagnetic substance.

It should be further noted that it is preferable to provide a protective film of DLC or the like, and it is also preferable to provide a lubricant layer. It is more preferable that a DLC film as the protective film in a thickness from 5 to 30 nm and the lubricant layer are both present. Moreover, a contact intensifying layer of Si or the like may be provided between the magnetic layer and the protective film. The lubricant remedies deterioration of durability such as by the occurrence of scratches attributable to friction, which may be incurred when correcting misalignment during the process of contacting with the slave medium.

The master carrier may also be formed in a manner that a resin substrate is fabricated out of the aforementioned original disc and then the magnetic layer is provided on its surface. Resin materials usable for the resin substrate include: acrylic resin such as polycarbonate and polymethylmethacrylate; vinyl chloride resin such as polyvinyl chloride and vinyl chloride copolymers; epoxy resin; amorphous polyolefin; and polyester. Polycarbonate resin is preferred in terms of moisture resistance, dimensional stabilization and cost. When molded items carry burrs, the burrs are removed with varnish or polish. Alternatively, the resin substrate may be formed by spin coating or bar coating utilizing ultraviolet curing resin or electron beam curing resin. The height of patterned protrusions of the resin substrate is preferably in a range from 50 to 1000 nm, more preferably in a range from 200 to 500 nm.

The master carrier is obtained by coating a magnetic layer on the surface of the concavo-convex micro-patterns of the resin substrate. Formation of the magnetic layer is performed by film forming with a magnetic material using vacuum film-forming means such as a vacuum deposition method, a sputtering method and an ion plating method, or by using a plating method.

On the contrary, the photo-lithograph and fabrication method is carried out, for example, by coating a photoresist on a flat surface of a plane substrate glass plate, and then by exposure and development using a photomask corresponding to patterns of servo signals. Patterns corresponding to the information are thereby formed. Subsequently, the substrate is subjected to etching in accordance with the patterns in an etching step, thus forming holes with the depth corresponding to the thickness of a magnetic layer. Next, the magnetic layer is deposited in the thickness corresponding to the formed holes with a magnetic material by vacuum film-forming means such as a vacuum deposition method, a sputtering method and an ion plating method, or by a plating method. Thereafter, the photoresist is removed by a lift-off method. Then the surface thereof is polished; burrs are removed when present; and the surface is smoothed.

Now, the slave medium will be described. As the slave medium, rigid discoid magnetic recording media such as a hard disk are used. Here, magnetic recording media of a coating type or a metallic thin-film type are used. Commercially available media such as high-density flexible disks are examples of the magnetic recording media of coating type. Regarding the magnetic recording media of metallic thin-film type, materials such as Co, Co alloys (such as CoPtCr, CoCr, CoPtCrTa, CoPtCrNbTa, CoCrB and CoNi), Fe, and Fe alloys (such as FeCo, FePt and FeCoNi) can be used as the magnetic material. These material are preferred if they possess high magnetic flux densities and magnetic anisotropy of the same direction as that of the slave medium 2 (the direction of the magnetic field application is parallel to the surfaces of the master carrier and the slave medium in the case of intra-surface recording, and the direction of the magnetic field application is perpendicular to the surfaces of master carrier and the slave medium in the case of vertical recording), because those features effectuate clear transfer. It is also preferred to provide a nonmagnetic under layer in order to provide necessary magnetic anisotropy beneath the magnetic material (on the side of the base). It is essential that crystal structures and crystal lattice parameters are adapted for the magnetic layer. In this context, materials such as Cr, CrTi, CoCr, CrTa, CrMo, NiAl, Ru and the like can be used.

## Claims

1. A method of magnetic transfer for performing magnetic transfer by bringing a master carrier bearing information signals and a slave medium into close contact with each other then applying a transfer magnetic field thereto,
wherein the slave medium is conveyed in a manner that a recording surface of the slave medium faces vertically toward the master carrier, being held in a manner that an information-bearing surface thereof is held vertically, then bringing the information-bearing surface of said master carrier and the recording surface of the slave medium into close contact with each other.

2. A method of magnetic transfer for performing magnetic transfer by bringing a master carrier bearing information for transfer and a slave medium into close contact with each other then applying a transfer magnetic field thereto, wherein said slave medium is conveyed to a position for close contact with said master carrier in a state that the slave medium is held by a slave holder.

3. The method of magnetic transfer according to claim 2,
wherein the slave medium is positioned and held at the slave holder, and
an alignment of the master carrier with the slave medium is performed via the slave holder.

4. A magnetic transfer device that performs magnetic transfer by bringing a master carrier bearing information signals and a slave medium into close contact with each other then applying a transfer magnetic field thereto, said magnetic transfer device comprising:
contacting means that holds the master carrier in a manner so that an information-bearing surface of the master carrier faces vertically and that brings the information-bearing surface into contact with the slave medium;
conveying means that conveys the slave medium in a manner so that a recording surface of the slave medium faces vertically toward said contacting means; and
magnetic field generating means that applies a magnetic field to the slave medium and the master carrier collectively held at the contacting means.

5. A magnetic transfer device that performs magnetic transfer by bringing a master carrier bearing information for transfer and a slave medium into close contact with each other then applying a transfer magnetic field thereto, said magnetic transfer device comprising:
a close contact base that positions and holds said master carrier;
a slave holder that positions and holds said slave medium and conveys the slave medium to a position for close contact;
pressurizing means that brings the slave medium held by the slave holder and the master carrier into close contact with each other;
a positioning mechanism that aligns the close contact base with the slave holder; and
magnetic field applying means that applies a transfer magnetic field to the slave medium and the master carrier that are closely contacted with each other.

6. The magnetic transfer device according to claim 5,
wherein either a plurality of positioning pins or a plurality of positioning holes are provided on the close contact base;
either a plurality of positioning holes or a plurality of positioning pins are provided on said slave holder; and
the positioning mechanism performs alignment by engaging the positioning pins with the positioning holes.

7. The magnetic transfer device according to claim 6,
wherein diameters of the positioning holes are designed to be greater than those of the positioning pins, and the positioning pins and the positioning holes are partially engaged to perform alignment.

8. A magnetic recording medium, wherein information signals that are magnetically transferred to the magnetic recording medium by the method according to claim 1 are composed of servo signals.

9. A magnetic recording medium, wherein information signals that are magnetically transferred to the magnetic recording medium by the device according to claim 4 are composed of servo signals.
